(19) Europäisches Patentamt
European Patent Office
Office européen des brevets

(11) **EP 3 942 686 B1**

(12) **EUROPEAN PATENT SPECIFICATION**

(45) Date of publication and mention
of the grant of the patent:
**13.09.2023 Bulletin 2023/37**

(21) Application number: **20719490.3**

(22) Date of filing: **19.03.2020**

(51) International Patent Classification (IPC):
**H02N 2/18** *(2006.01)* **H02K 35/00** *(2006.01)*

(52) Cooperative Patent Classification (CPC):
**H02N 2/181; H02K 35/00**

(86) International application number:
**PCT/IB2020/052514**

(87) International publication number:
**WO 2020/188511 (24.09.2020 Gazette 2020/39)**

(54) **ELECTRONIC DEVICE AND METHOD FOR THE MAXIMIZATION OF THE AVERAGE POWER EXTRACTED FROM A VIBRATION HARVESTER**

ELEKTRONISCHE VORRICHTUNG UND VERFAHREN ZUR MAXIMIERUNG DER AUS EINEM VIBRATIONSENERGIEGEWINNER EXTRAHIERTEN DURCHSCHNITTLICHEN LEISTUNG

DISPOSITIF ÉLECTRONIQUE ET PROCÉDÉ PERMETTANT LA MAXIMISATION DE LA PUISSANCE MOYENNE EXTRAITE D'UN RÉCUPÉRATEUR VIBRATOIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.03.2019 IT 201900004067**

(43) Date of publication of application:
**26.01.2022 Bulletin 2022/04**

(73) Proprietor: **Università degli Studi della Campania "Luigi Vanvitelli"**
**81100 Caserta (CE) (IT)**

(72) Inventors:
• **LO SCHIAVO, Alessandro**
**81100 Caserta (CE) (IT)**
• **VITELLI, Massimo**
**81100 Caserta (CE) (IT)**
• **COSTANZO, Luigi**
**81100 Caserta (CE) (IT)**

(74) Representative: **Pace Napoleone, Maria et al**
**De Simone & Partners S.r.l.**
**Via Vincenzo Bellini, 20**
**00198 Roma (IT)**

(56) References cited:
**US-A1- 2013 270 964    US-A1- 2014 361 662**
**US-A1- 2015 326 212    US-B1- 6 580 177**

• **CHENG LUO ET AL: "Wideband energy harvesting for piezoelectric devices with linear resonant behavior", IEEE TRANSACTIONS ON ULTRASONICS, FERROELECTRICS AND FREQUENCY CONTROL, IEEE, US, vol. 58, no. 7, 1 July 2011 (2011-07-01), pages 1294-1301, XP011329748, ISSN: 0885-3010, DOI: 10.1109/TUFFC.2011.1949 cited in the application**
• **BEN-YAAKOV S ET AL: "Resonant rectifier for piezoelectric sources", APPLIED POWER ELECTRONICS CONFERENCE AND EXPOSITION, 2005. APEC 2005. TWENTIETH ANNUAL IEEE AUSTIN, TX, USA 6-10 MARCH 2005, PISCATAWAY, NJ, USA,IEEE, US, vol. 1, 6 March 2005 (2005-03-06), pages 249-253Vol.1, XP010809405, DOI: 10.1109/APEC.2005.1452928 ISBN: 978-0-7803-8975-5**

EP 3 942 686 B1

**Description**

**TECHNICAL FIELD**

The present invention relates to a circuit device for the maximization of the average power provided by a vibration energy harvester to a diode bridge rectifier and to a corresponding method for the maximization of said power. Furthermore, the present invention relates to a system for maximizing the average power transferred from a vibrating source to a load.

**STATE OF THE ART**

In recent years, interest in Wireless Sensors Networks (hereinafter WSNs) has grown considerably, mainly due to their large use in Internet of Things applications in Industry 4.0. A WSN consists of a very large number of sensor nodes, which typically include a sensor, the electronics for its operation, one or more antennas for wireless communication, and the power supply. Most existing WSNs are powered by batteries. However, batteries have a number of disadvantages such as high cost, limited reliability, frequent maintenance requirements for their recharging or replacement, and significant risks to the environment because they contain potentially hazardous chemicals.

The conversion of the energy available in the environment (mechanical, solar, thermal, etc.) into electrical energy, also called Energy Harvesting, can offer an alternative solution to batteries or at least allows increasing their lifetime. Since vibrations are present in a very large number of applications, WSNs powered by Vibration Energy Harvesters (hereinafter VEHs) are increasingly used.

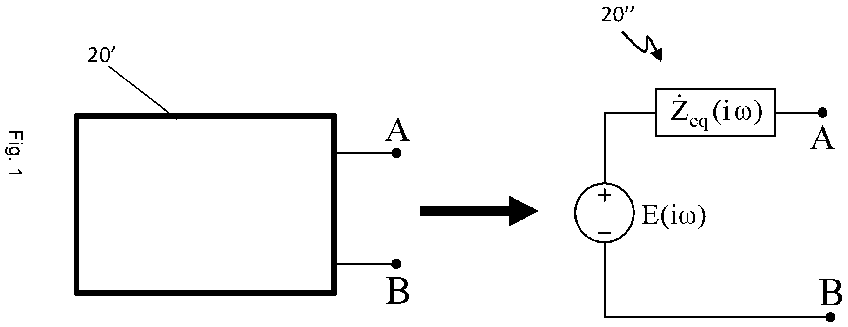

The types of VEHs most studied in the literature are Piezoelectric VEHs, Electromagnetic VEHs and Magnetostrictive VEHs. Piezoelectric VEHs are based on the so-called piezoelectric effect which lies in the ability of some materials to generate an electrical voltage in response to a mechanical stress applied thereto. The electrical voltage generated is directly related to the mechanical stress applied. In an Electromagnetic VEH, a permanent magnet is used to generate a magnetic field and induce an electromotive force into a coil. Usually, the coil is fixed while the permanent magnet is movable and acts as an inertial mass. The relative displacement between the magnet and the coil caused by the vibrations allows the generation of electrical power. Magnetostrictive VEHs are based on magnetostrictive materials that can be considered the dual version of piezoelectric ones. In fact, they are capable of generating a magnetic field in response to a mechanical stress. This effect can be used to induce an electromotive force into a coil and then convert the mechanical energy of the vibrations into electrical energy. The typical equivalent electrical circuit 20" of a VEH 20', operating under sinusoidal conditions, is shown in Fig. 1. $E(i\omega)$ represents the open circuit voltage between the output terminals of the VEH 20', while $\dot{Z}_{eq}(i\omega)$ is the output impedance of the VEH 20'. In order to maximize, for each input vibration frequency, the power transferred from the vibrating source to a linear load, the impedance of that load must coincide with a well-defined optimal impedance $\dot{Z}_{OPT}$. Based on the maximum power transfer theorem, $\dot{Z}_{OPT}$ must be the complex conjugate of $\dot{Z}_{eq}$. It should be noted that, depending on the working frequency, $\dot{Z}_{OPT}$ can be ohmic-inductive or ohmic-capacitive.

In practical applications, the load of a VEH is not a linear impedance, because the output voltage of the VEH must be rectified by an AC/DC converter in order to supply a DC load such as a sensor node. Therefore, in order to maximize the power transferred from the vibrating source to a DC load at each vibration frequency, the AC/DC interface converter must be properly controlled to emulate the optimal impedance $\dot{Z}_{OPT}$ at its input. Furthermore, since the frequency of vibrations, and consequently $\dot{Z}_{OPT}$, varies during time in practical applications, it is necessary to implement maximum power point tracking techniques that allow the AC/DC converter to emulate the optimal impedance in every possible operating condition. In the literature of recent years, numerous topologies of single-stage or double-stage active AC/DC converters and related control techniques have been proposed for emulating and tracking the optimal impedance $\dot{Z}_{OPT}$ (for example C. Luo, et al., "Wideband Energy Harvesting for Piezoelectric Devices With Linear Resonant Behavior", IEEE Trans. on Ultrasonics, Ferroelectrics, and Frequency Control, vol. 58, no. 7, July 2011, pp. 1294-1301; Y. Liu, et al., "Active piezoelectric energy harvesting: General principle and experimental demonstration", J. Intel. Mat. Syst. Str., vol. 20, pp. 575-585, Mar. 2009). However, these solutions are almost always not suitable for practical low power applications, because they are characterized by high complexity (both in the power stage and the control circuitry) and therefore they lead to power losses which are not suitable for the low power levels typical of VEHs.

Specifically, the aforementioned document by *C. Luo et al.* describes an active type AC/DC rectifier device that is put in cascade between the harvester and a battery. The objective of this device is to impose at the harvester terminals a square wave voltage at a specific frequency (which must coincide with the frequency of vibrations) whose first harmonic is coincident with the voltage (amplitude and phase) that would be at the ends of the optimal impedance of the harvester and therefore it can only work in presence of purely sinusoidal vibrations. If the source vibration frequency deviates even slightly (fractions of Hz) from the set frequency or otherwise it changes over time, after little time the system will lose synchronization (and therefore it will waste the available power). This can only be avoided if the frequency of the square wave is continuously adapted to the frequency of the source and therefore if the latter is monitored through, for example, an additional accelerometer.

For some of the above reasons, passive diode bridge rectifiers are usually used in practical applications for the AC/DC conversion of the output voltage of a VEH. These devices are characterized by a much lower complexity than active rectifiers and are therefore more suitable for low power applications. Unfortunately, passive bridge rectifiers are not able to emulate the optimal impedance of a VEH $\dot{Z}_{OPT}$ at their input. In fact, at the frequency of the fundamental harmonic they behave like a purely resistive load, possibly controllable by regulating the output DC voltage. Without appropriate optimizations, the performance of VEHs loaded with passive bridge rectifiers can therefore be very poor, even if the optimal DC voltage downstream of the bridge is tracked.

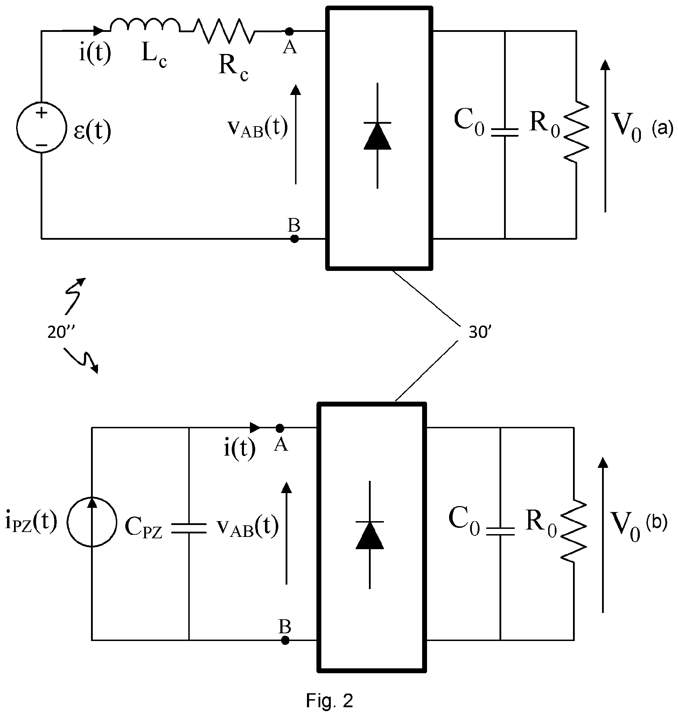

Figures 2a and 2b show the equivalent circuit seen at the output terminals of the three main types of VEHs 20'. In the case of Electromagnetic and Magnetostrictive VEHs (Fig. 2a), these terminals coincide with those of the coil and therefore the equivalent circuit consists of a voltage source ($\varepsilon(t)$ is the electromotive force induced in the coil) in series with a resistance $R_c$ and an inductance $L_c$ (resistance and inductance of the coil). Instead, in the case of Piezoelectric VEHs (Fig. 2b), the equivalent circuit consists of a current source ($i_{PZ}(t)$ is the current generated by piezoelectric effect) in parallel with a capacitance $C_{PZ}$ (output capacitance of the piezoelectric material layers).

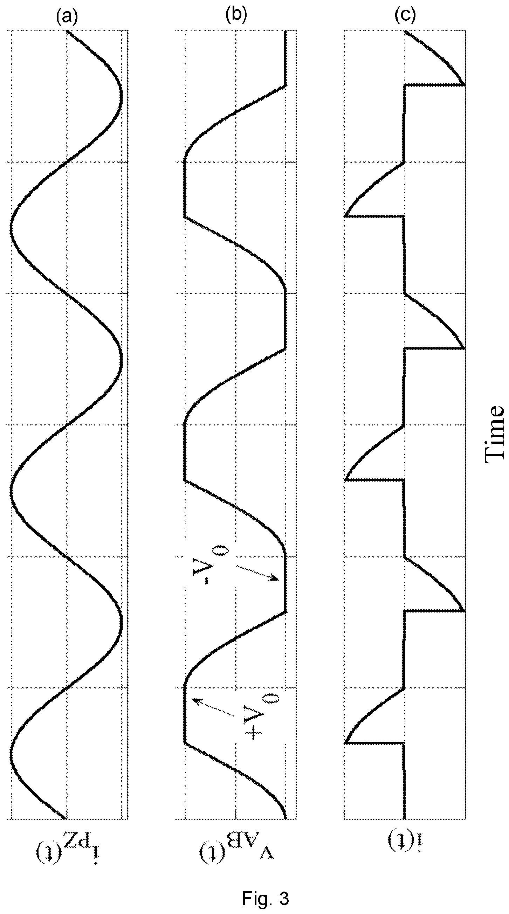

The presence of the reactive components ($L_c$ or $C_{PZ}$) in the VEH equivalent circuit has a negative impact on the power extraction. In order to clarify this concept and without any loss of generality, consider a Piezoelectric VEH tracked by a diode bridge rectifier 30' whose voltage drops on the diodes will be neglected for simplicity (Fig. 2b). Figures 3a-3c show the typical waveforms of the main electrical quantities, namely the current $i_{PZ}(t)$ in figure 3a, the voltage $v_{AB}(t)$ in figure 3b and the output current $i(t)$ in figure 3c. When the voltage $v_{AB}(t)$ at the input of the bridge rectifier 30' is equal to $+V_0$ ($V_0$ being the voltage downstream of the rectifier 30'), the output current at the VEH 20' is positive, $i(t) > 0$, and power is transferred from the VEH 20' to the rectifier 30' and its DC load. Similarly, when the bridge input voltage is $-V_0$, the current is negative, $i(t) < 0$, and power is transferred from the VEH 20' to the rectifier 30'. Conversely, when $|v_{AB}(t)| < V_0$, since the current $i_{PZ}(t)$ flows entirely in the capacitance $C_{PZ}$, it is $i(t) = 0$ and the power transferred to the DC load through the rectifier 30' is null. This operating condition lasts for the time necessary for charging, and then discharging, the capacitance $C_{PZ}$. The duration of these time intervals depends, therefore, on the value of the output capacitance $C_{PZ}$. The higher the value of this capacitance, the greater the rise and fall times of the voltage $v_{AB}(t)$ between $+V_0$ and $-V_0$ (times in which $|v_{AB}(t)| < V_0$ and in which there is no power extraction). It is therefore evident that the output capacitance $C_{PZ}$ has a negative impact on the power extraction.

Similar considerations can be made in the case of the Electromagnetic and Magnetostrictive VEHs shown in figure 2b with reference to the negative effect that the inductance $L_c$ has on the extracted power.

Therefore, an object of the present invention is to provide a device, a method and a system that partially or completely overcome the drawbacks of the aforementioned known devices and methods.

## DESCRIPTION OF THE INVENTION

These objectives are achieved by a vibration energy harvester, by a system and by a method according to the claims at the end of the present description.

The device according to the present invention is a self-powered active electrical circuit. In particular, this circuit device is used for the maximization of the average power provided by a vibration energy harvester to a passive diode bridge rectifier, in which the harvester is coupled to an external source of vibrations having a determined and arbitrary shape and frequency. Arbitrary vibration is also intended as a non-sinusoidal and non-periodic shape. At the output terminals of its equivalent circuit, the harvester has at least one reactive component, for example a capacitance or an inductance. According to the configuration of the present invention, the input voltage of the device coincides with the input voltage of the passive diode bridge rectifier connected to the harvester output terminals.

The device according to the present invention is configured from the circuital point of view to draw at the harvester output terminals a compensation current equal and opposite to the current flowing through the reactive component, independently of the vibration shape and frequency of the vibration source and independently of the shape in time and amplitude of the output voltage of the harvester.

The device according to the present invention is characterized in that it further comprises a power circuit composed of at least a first transistor ($M_p$) and a second transistor ($M_n$) for adapting the compensation current ($i_n$) to the current flowing through the reactive component (22). Furthermore, the device comprises a control circuit composed of at least an operational amplifier (13) and a hysteresis comparator (14) for managing the turn on and turn off of the first and second transistor ($M_p$, $M_n$).

Such a device serves to maximize the power extracted from a VEH independently of the vibration shape and frequency entering the harvester, without however relying on the optimal impedance tracking theory known in the literature.

For example, by inserting the device in parallel between the VEH and a passive bridge rectifier it is possible to eliminate the negative effects that the reactive components present in the equivalent circuit of the VEH have on the extracted power. For this reason, the device can be called Vibration Energy Harvesters Power Optimizer (VEHPO).

It should be noted that the compensation current synthesis power circuit composed of at least a first transistor and a second transistor is used to adjust the compensation current to the current flowing through the reactive component. For example, the amplitude of the compensation current can increase when the first transistor is off and the second transistor is on, while it can decrease when the first transistor is on and the second transistor is off. In particular, the first transistor can be a p-channel or p-MOS transistor and the second transistor can be an n-channel or n-MOS transistor. The drain of the first transistor is connected to the drain of the second transistor and to an inductor terminal. The other inductor terminal is connected to the first input terminal of the device. In addition, two diodes are connected in antiparallel to each transistor.

Depending on whether the VEH is piezoelectric or electromagnetic or magnetostrictive, the reactive component of the equivalent circuit can be a capacitor or an inductor. If the reactive component of the harvester is capacitive, the compensation current drawn by the device at the harvester output terminals is proportional to the opposite of the time derivative of the output voltage of the harvester. If, on the other hand, the reactive component of the harvester is inductive, the compensation current drawn by the device at the harvester output terminals is proportional to the opposite of the time integral of the output voltage of the harvester.

As mentioned above, the control circuit consisting of an operational amplifier and a hysteresis comparator is used to control the turn on and turn off of the first and second transistors. In the case of a device configured to emulate a negative capacitance (herein and hereinafter a device configured to "emulate a negative capacitance" is intended as the case where the reactive component of the harvester is capacitive and thus the compensation current is proportional to the opposite of the time derivative of the output voltage of the harvester), the inverting terminal of the operational amplifier is connected via a series resistance to a capacitance to the first input terminal of the device. In addition, the inverting terminal of the operational amplifier is connected to the second input terminal of the device via two resistances. The non-inverting terminal of the operational amplifier is connected to the second input terminal of the device. The output of the operational amplifier is connected to the non-inverting terminal of the hysteresis comparator and through a resistance to the inverting terminal of the operational amplifier. The inverting terminal of the hysteresis comparator is connected to the second input terminal of the device. Otherwise, in the case of a device configured to emulate a negative inductance (herein and hereinafter a device configured to "emulate a negative inductance" is intended as the case where the reactive component of the harvester is inductive and thus the compensation current is proportional to the opposite of the time integral of the output voltage of the harvester), the inverting terminal of the operational amplifier is connected via a resistance to the first input terminal of the device. In addition, the inverting terminal of the operational amplifier is connected through two resistances, with a capacitance parallel to the first of the two resistances, to the second input terminal of the device. The non-inverting terminal of the operational amplifier is connected to the second input terminal of the device. The output of the operational amplifier is connected to the non-inverting terminal of the hysteresis comparator and, via a resistance in parallel to a capacitance, to the inverting terminal of the operational amplifier. The inverting terminal of the hysteresis comparator is connected to the second input terminal of the device.

In accordance with an embodiment of the device according to the present invention, the device can further comprise a first capacitor and a second capacitor for supplying respectively at voltage $V_p$ and $V_n$ the amplifier and the hysteresis comparator. The first capacitor is connected with one terminal to the p-MOS source and with the other to the second capacitor. The second capacitor is connected with one terminal to the first capacitor and with the other to the n-MOS source. The shared terminals of the two capacitors are connected by a resistance at the second input terminal of the device.

In order to avoid the simultaneous conduction of two transistors during commutations, a dead-time can be introduced into their control inputs. For this purpose, a first circuit network composed of at least one resistance, a capacitor and a diode can be provided for each transistor for delaying the turn on of a transistor with respect to the other. The resistance and the diode are connected in parallel to each other. The resistance and the diode are connected with one terminal at the output of the comparator, and with the other terminal at the first terminal of the capacitor. The second capacitor terminal is connected to the source of each transistor. In the network connected to the n-MOS transistor, the diode cathode is connected to the output of the comparator. On the other hand, in the network connected to the p-MOS transistor, the diode anode is connected to the output of the comparator.

In addition, to avoid the locking of the first and second transistors in an on state when the first and second capacitors are not yet charged, the device can provide a second circuit network composed at least of a capacitor and a diode, for each transistor. One capacitor terminal is connected to the diode of the first circuit network and the other terminal is connected to the gate terminal of each transistor. In the n-MOS transistor network, the diode cathode is connected to the n-MOS gate and the anode to the n-MOS source. In the p-MOS transistor network the diode anode is connected to the p-MOS gate and the cathode to the p-MOS source.

The system for optimizing the power transferred from a vibrating source to an electric load according to the present invention comprises at least one vibration energy harvester coupled to the vibration source having a determined shape and frequency, the circuit device according to one of the aspects and embodiments described above and a passive diode bridge rectifier coupled to the electric load. In particular, the device is connected in parallel between the output terminals of the harvester and the passive diode bridge rectifier.

According to another aspect of the present invention a method is provided for the maximization of the average power provided by a vibration energy harvester to a passive diode bridge rectifier, wherein the harvester is coupled to an external source of vibrations having a determined and arbitrary shape and frequency and wherein the equivalent circuit of the harvester comprises at least one reactive component at the output terminals. The method comprises the step of drawing at the output terminals of the harvester a compensation current equal and opposite to the current flowing through the reactive component, independently of the shape and frequency of vibration and independently of the shape in time and the amplitude of the output voltage of the harvester.

The method is characterized in that it adjusts the compensation current to the current flowing through the reactive component by means of a power circuit composed of at least a first transistor and a second transistor and manages the turn on and turn off of the first and second transistors by means of a control circuit composed at least of an operational amplifier and a hysteresis comparator.

The VEHPO electronic optimizer according to the present invention, as well as the system and the method associated therewith, aims to eliminate the negative effects on power extraction due to the reactive components of the equivalent circuit of the harvester, compensating such components at each input vibration frequency and independently of the shape of the vibration.

The main advantages of the device, system and method according to the present invention are the following:

- it is possible to work efficiently in presence of vibrations characterized by both purely sinusoidal and non-sinusoidal accelerations;
- no external power is required, as the device is powered directly by the harvester to which it is connected;
- the device implementation is inexpensive;
- depending on the characteristics of the input vibration, the use of the device results in a very substantial percent increase in the extracted power. For example, in some cases the percent increase in extracted power can reach values up to 150%.

These and other aspects of the present invention will become more apparent by reading the following description of some preferred embodiments described below.

Fig. 1 shows a diagram of an equivalent circuit of a standard VEH operating under sinusoidal regime conditions;

Fig. 2a-b show diagrams of the output stage of the equivalent circuit of the VEHs loaded with passive diode bridge rectifiers in the case of electromagnetic and magnetostrictive VEHs (a) and in the case of piezoelectric VEHs (b);

Fig. 3a-b show a diagram of the typical waveforms of the current $i_{PZ}(t)$ (a), $V_{AB}(t)$ (b) and I(i) (c) in a VEH loaded with a passive bridge rectifier;

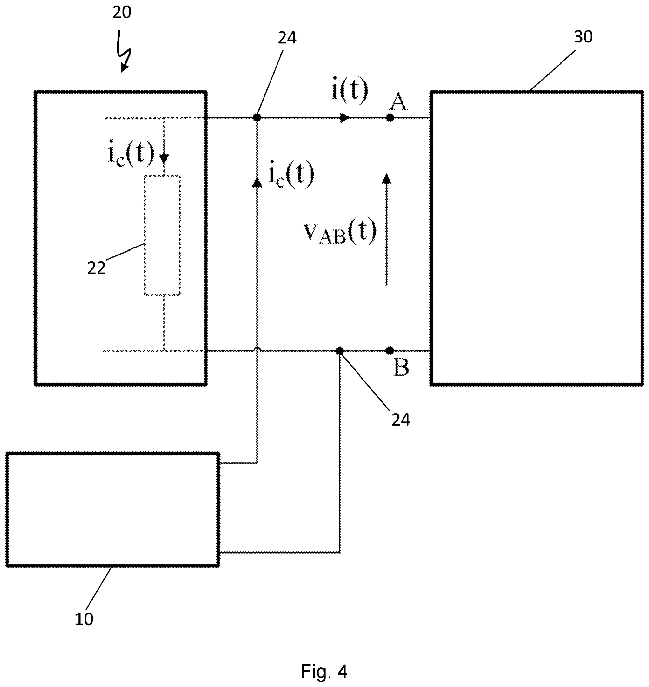

Fig. 4 shows a diagram of a device according to an embodiment of the present invention;

Fig. 5 shows a diagram of the insertion of the device (VEHPO) in parallel with a piezoelectric VEH and a bridge rectifier;

Fig. 6a-b show the circuit diagram of a device according to the present invention operating as an equivalent negative capacitance (a) and operating as an equivalent negative inductance (b);

Fig. 7 shows a diagram of the architecture of the system according to the present invention;

Fig. 8a-b show the waveforms measured with a VEH resonance frequency of 232 Hz, sinusoidal acceleration and 20k$\Omega$ load, when the device (VEHPO) is not connected (a) and when the device (VEHPO) is connected (b);

Fig. 9a-b show the waveforms measured with a VEH resonance frequency of 232 Hz, non-sinusoidal acceleration and 20k$\Omega$ load when the device (VEHPO) is not connected (a) and when the device (VEHPO) is connected (b);

Fig. 10a-b show the waveforms measured with a VEH resonance frequency of 477 Hz, sinusoidal acceleration and 20k$\Omega$ load when the device (VEHPO) is not connected (a) and when the device (VEHPO) is connected (b); and

Fig. 11a-b show the waveforms measured with a VEH resonance frequency of 477 Hz, non-sinusoidal acceleration and 27kΩ load when the device (VEHPO) is not connected (a) and when the device (VEHPO) is connected (b).

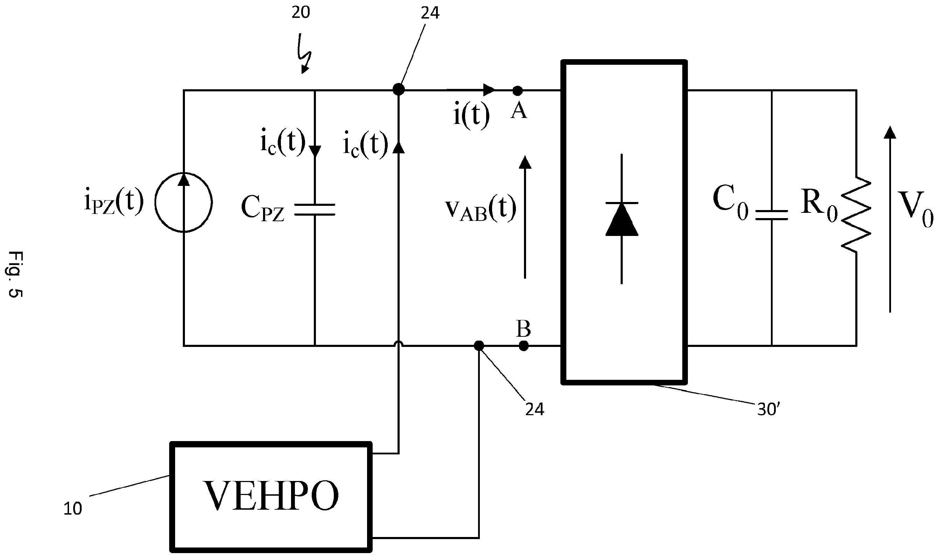

As highlighted above, the presence of the reactive components ($L_c$ or $C_{PZ}$) in the equivalent circuit of the harvesters 20 significantly reduces the maximum power that a passive diode bridge rectifier 30 can extract from the harvester 20 itself. If the case of a piezoelectric harvester 20 connected to a passive rectifier 30 is considered, the typical waveforms of the currents and voltages are shown in Fig. 3a-c. The current generated by piezoelectric effect $i_{PZ}(t)$ flows entirely in the capacitance $C_{PZ}$ during the transitions of the bridge input voltage, $v_{AB}(t)$, between the limit values $-V_0$ and $+V_0$, reducing the mean power transferred to the DC load. The greater the capacitance $C_{PZ}$, the longer the durations of these transitions will be. Thus, the current flowing in the capacitance $C_{PZ}$ reduces the time intervals in which the bridge diodes conduct, and thus reduces the power transferred to the DC load. In order to minimize the negative effect of $C_{PZ}$, the self-powered active device 10 according to the present invention, when connected in parallel with a harvester 20, is able to compensate for the negative effect of the capacitance $C_{PZ}$ by injecting a current coinciding with that which the capacitance $C_{PZ}$ absorbs, $i_c(t)$, as shown in Fig. 5.

Depending on the type of harvester 20 to be optimized, i.e. piezoelectric or electromagnetic or magnetostrictive, the device 10 according to the present invention (VEHPO) aims at emulating a negative equivalent capacitance or emulating a negative equivalent inductance.

It is interesting to compare the VEHPO device 10, for example in the variant suitable for Piezoelectric VEHs, with an inductor whose inductance is sized so as to compensate for the capacitance $C_{PZ}$. Both devices have the objective of compensating the effects of the capacitance $C_{PZ}$ but, while one inductor is able to compensate the $C_{PZ}$ only at a sinusoidal source with a very specific working frequency (the one for which the inductor itself has been sized), the VEHPO 10 is able to eliminate the negative effects of this capacitance independently of the working frequency and the shape of the input vibrations (sinusoidal or not). This property makes the VEHPO 10 highly attractive from a practical point of view compared to a simple inductor.

In order to compare the device according to the present invention VEHPO 10 with a device based on the Synchronous Switched Harvesting with Inductor (SSHI) technique, which allows increasing the extraction of power from a Piezoelectric VEH by counteracting the effect of the capacitance of the piezoelectric layers, it should be noted that although SSHI has a control circuit characterized by components similar to the VEHPO 10 (but with different circuit architecture), the power circuit of the SSHI is profoundly different from that of the VEHPO 10. In fact, in SSHI the current that compensates for the capacitance of the piezoelectric layers flows into the series of the switched inductor, a MOS and a diode, resulting in power dissipations which are not negligible. On the other hand, the VEHPO 10 introduces at the output terminals of the harvester a current with a value equal to the current absorbed by the capacitance of the piezoelectric layers, avoiding power dissipations due to voltage drops on the diodes in series with the transistors in the case of SSHI. In addition, the SSHI technique has been specifically designed and developed for purely sinusoidal vibrations, while the VEHPO 10 operates regardless of the shape of the vibrations.

Finally, it is interesting to compare the VEHPO device 10 according to the present invention with devices that exhibit positive or negative reactive impedance at their input and are implemented using linear circuits based on integrated amplifiers, such as Operational Amplifiers (OA), Current Feedback Operational Amplifiers (CFOA), Operational Transconductance Amplifiers (OTA), and so on. A large number of such devices have been proposed in the literature in order to optimize the various characteristics of such circuits such as the number of components, frequency band and parameter adjustment. These linear circuit-based devices have been applied in the case of piezoelectric transducers to implement impedance matching and partially or completely eliminate the reactive output impedance of such transducers. For this purpose, they have been effectively used in so-called negative capacitance circuits for the active damping of structure vibrations through piezoelectric transducers, as they reduce the internal capacitance of the transducers themselves. In order to implement the desired impedance matching, these linear circuits are based on the reactive power exchange, at the fundamental harmonic, between the transducer and the linear circuits themselves. Due to the limits of the output stages of the integrated amplifiers that can only operate in the active i-v quadrants, the reactive power exchanges between these linear compensation circuits and the transducers take place using the energy drawn from the power supply of the linear circuits themselves. This means that linear circuit-based devices absorb active power from the external power supply and are therefore not energy efficient and cannot be used in low power harvesting applications. Unlike linear circuits, the VEHPO 10 device does not absorb energy from any external power supply. The power part of the VEHPO device 10 according to the present invention is capable of working in all four quadrants i-v and thus allows reactive power exchanges with the transducer, by temporarily storing energy in its capacitors. The control part of the VEHPO 10, while employing a linear circuit based on operational amplifiers, is self-powered by the power part of the VEHPO 10.

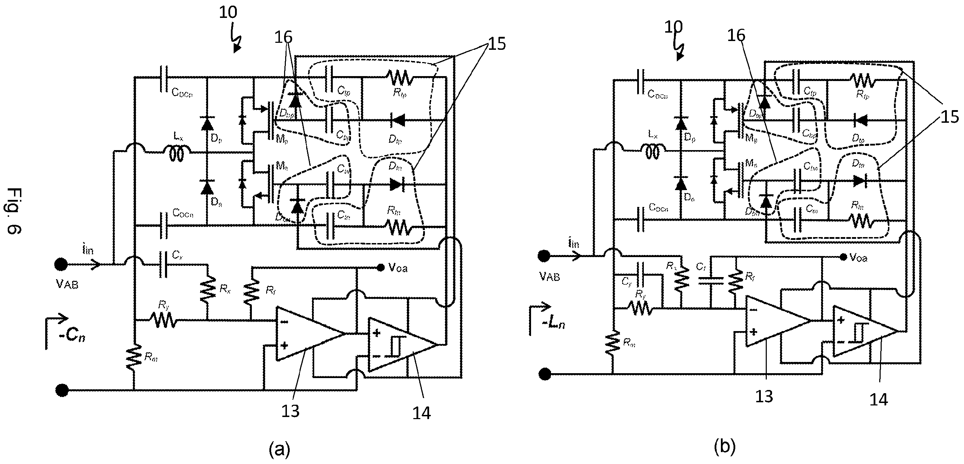

The VEHPO device 10 according to the present invention can be implemented in the two different architectures shown in Figure 6a and Figure 6b, depending on the type of harvester 20 to be optimized. For the optimization of piezoelectric harvesters, the VEHPO 10 aims at emulating a negative equivalent capacitance and can be implemented through the switching circuit shown in Fig. 6a. For the optimization of electromagnetic and magnetostrictive harvesters, the VEHPO 10 aims at emulating a negative equivalent inductance and can be implemented through the switching circuit shown in Fig. 6b.

With reference to the circuit of figure 6a, the input voltage $v_{AB}$ of the device 10 coincides with the output voltage of the harvester 20 and is set from outside the VEHPO device 10. In contrast, the current $i_{in}$ is set by the VEHPO 10. In particular, the VEHPO is composed of a power circuit and a control circuit. The power circuit generates the current $i_{in}$ and the control circuit ensures that the current $i_{in}$ tracks the opposite of the current absorbed by the capacitance $C_{PZ}$ of the equivalent circuit of the harvester 10.

The power circuit of the VEHPO device consists of the transistors p-MOS, $M_p$, and n-MOS, $M_n$, the two antiparallel diodes $D_p$ and $D_n$, the two capacitors $C_{DCp}$ and $C_{DCn}$, and the inductor $L_x$. The control circuit of the VEHPO device consists of the operational amplifier 13, the hysteresis comparator 14, the two dead-time management networks 15, the two anti-locking networks 16, the resistances $R_m$, $R_y$, $R_x$, $R_f$ and the capacitor $C_x$.

With reference to the architecture of the power circuit, the transistor drain $M_p$ is connected to the transistor drain $M_n$ and to an inductor terminal. The other inductor terminal is connected to the first input terminal of the device. The two diodes $D_p$ and $D_n$ are connected in antiparallel to each transistor. Furthermore, the first capacitor $C_{DCp}$ is connected with one terminal to the p-MOS source and with the other to the second capacitor $C_{DCn}$. The second capacitor $C_{DCn}$ is connected with one terminal to the first capacitor $C_{DCp}$ and with the other to the n-MOS source. The shared terminals of the two capacitors are connected by the resistance $R_m$ to the second input terminal of the device.

With reference to the architecture of the control circuit of Figure 6a, the inverting terminal of the operational amplifier is connected via the resistance $R_x$, in series to the capacitor $C_x$, to the first input terminal of the device. In addition, the inverting terminal of the operational amplifier is connected via the two resistances $R_m$ and $R_y$, to the second input terminal of the device. The non-inverting terminal of the operational amplifier is connected to the second input terminal of the device. The output of the operational amplifier is connected to the non-inverting terminal of the hysteresis comparator and, through the resistance $R_f$, to the inverting terminal of the operational amplifier. The inverting terminal of the hysteresis comparator is connected to the second input terminal of the device.

Furthermore, the control circuit comprises a first circuit network for each of the transistors $M_n$ and $M_p$, for delaying the turn on of one transistor with respect to the other. The networks are composed of the resistances $R_{tn}$ and $R_{tp}$ respectively, the capacitors $C_{tn}$ and $C_{tp}$ respectively, and the diodes $D_{tn}$ and $D_{tp}$ respectively. The resistance and the diode are connected in parallel to each other. The resistance and the diode are connected with one terminal at the output of the comparator, and with the other terminal at the first terminal of the capacitor. The second capacitor terminal is connected to the source of each transistor. In the network connected to the n-MOS transistor, the diode cathode is connected to the output of the comparator. On the other hand, in the network connected to the p-MOS transistor, the diode anode is connected to the output of the comparator. Furthermore, to avoid the locking of the first and second transistors in an on state when the first and second capacitors, $C_{DCp}$ and $C_{DCn}$, are not yet charged, the control circuit comprises a second circuit network consisting of the capacitor, $C_{bn}$ or $C_{bp}$, and the diode, $D_{bn}$ or $D_{bp}$, for each of the transistors $M_n$ and $M_p$. One capacitor terminal is connected to the diode of the first circuit network and the other terminal is connected to the gate terminal of each transistor. In the n-MOS transistor network, the diode cathode is connected to the n-MOS gate and the anode to the n-MOS source. In the p-MOS transistor network the diode anode is connected to the p-MOS gate and the cathode to the p-MOS source.

With reference to the operation of the VEHPO device in the version shown in Figure 6a , the control circuit of the VEHPO 10 ensures that the current $i_{in}$ tracks the opposite of the current absorbed by the capacitance $C_{PZ}$ of the equivalent circuit of the harvester 10, controlling the turn on and turn off of the MOS transistors $M_p$ and $M_n$ of the VEHPO 10. In particular, the current amplitude $i_{in}$ increases when the MOS $M_n$ is ON and the MOS $M_p$ is OFF, while it decreases when the MOS $M_n$ is OFF and the MOS $M_p$ is ON. These MOS transistors are turned on and off by a hysteresis comparator 14 such that the output of the operational amplifier 13, $v_{oa}$, remains within a band around zero.

Denoting with $V_{oa}(s)$, $V_{AB}(s)$ and $I_{in}(s)$ the Laplace Transforms respectively of $v_{oa}(t)$, $v_{AB}(t)$ and $i_{in}(t)$ in Figure 6a, where s is the complex variable, according to the Kirchhoff's currents law applied to the inverting node of the operational amplifier 13, assuming that $R_y \gg R_m$, it is easy to obtain the expression $V_{oa}(s)$, i.e., according to equation 1:

$$V_{oa}(s) = -\frac{s\ R_f\ C_x}{1+s\ R_x\ C_x} \cdot V_{AB}(s) - \frac{R_f\ R_m}{R_y} \cdot I_{in}(s)$$

**Equation 1**

When the hysteresis control operates, $V_{oa}(s) \approx 0$ and, according to equation 1,

$$I_{in}(s) = -\frac{s\ C_x\ R_y/R_m}{1+s\ R_x\ C_x} \cdot V_{AB}(s)$$

**Equation 2**

If $1/(R_x \cdot C_x)$ is sufficiently high compared to the frequency band of the input voltage, i.e. $\omega_{in} << 1/(R_x \cdot C_x)$, equation 3 can be written:

$$I_{in}(s) = -s \cdot \frac{C_x\ R_y}{R_m} \cdot V_{AB}(s)$$

**Equation 3**

By applying the Laplace Reverse Transform to equation 3, equation 4 can be obtained:

$$i_{in}(t) = -\frac{C_x\ R_y}{R_m} \cdot \frac{d\ v_{AB}(t)}{dt}$$

**Equation 4**

Equation 4 shows that the VEHPO 10 absorbs, at the output terminals 24 of the harvester 20, a current $i_{in}$ proportional to the opposite of the derivative of $v_{AB}(t)$.

Thus, the circuit device 10 behaves as a negative capacitance with a value $C_n = -C_x \cdot R_y/R_m$. The values of the resistances $R_y$ and $R_m$ and the capacitance $C_x$ must be chosen based on the value of the output capacitance $C_{PZ}$ of the specific harvester 20 to be optimized. Note that, however, these values do not depend either on the frequency of the input vibration or on the resonance frequency of the considered harvester 20. This means that the device 10 according to the present invention can optimize a given harvester 20 independently of the mechanical characteristics with which it is mounted (stiffness or peak masses used to vary the resonance frequency) and regardless of the shape and frequency of the vibrations with which the harvester is stressed.

Furthermore, it should be noted that the pole in equation 2, due to the presence of $R_x$, is intentionally introduced to limit the gain of the operational amplifier 13 at high frequencies and thus prevent possible instability problems.

In addition, to avoid the simultaneous conduction of the two MOS transistors $M_p$ and $M_n$ during switching, a dead-time is introduced into their control inputs through the use of the two networks 15 (dead-time management networks) composed of $R_{tp}$, $C_{tp}$ and $D_{tp}$ for the MOS transistor $M_p$ and of $R_{tn}$, $C_{tn}$ and $D_{tn}$ for the MOS transistor $M_n$. In fact, the turn on of each of the MOS transistors $M_p$ or $M_n$ is delayed by the networks $R_{tp}$-$C_{tp}$ or $R_{tn}$-$C_{tn}$ with respect to the turn off of the other MOS transistor which is instead accelerated by the action of the diode $D_{tp}$ or $D_{tn}$.

Finally, the two networks 16 (anti-locking networks) composed of $C_{bp}$ and $D_{bp}$ for the MOS transistor $M_p$ and of $C_{bn}$ and $D_{bn}$ for the MOS transistor $M_n$, ensure that neither transistor remains locked in the ON state when the system is turned on, when the capacitors $C_{DCp}$ and $C_{DCn}$ are not yet charged. In fact, the capacitors $C_{bp}$ and $C_{bn}$ are large enough to act as short circuits in normal operating conditions, but disconnect the MOS gates $M_p$ and $M_n$ from the respective control signals, if these are locked in the ON state. In this condition, the inverse currents of the diodes $D_{bp}$ and $D_{bn}$ turn off the MOS.

It should be noted that the VEHPO device 10 is self-powered since both the operational amplifier 13 and the comparator 14 are powered at voltage $V_p$ and $V_n$ by the capacitors $C_{DCp}$ and $C_{DCn}$ which are charged by the diodes $D_p$ and $D_n$ in antiparallel respectively to the MOS transistors $M_p$ and $M_n$. The voltage levels $V_p$ and $V_n$ are linked to the peak value of the input voltage $v_{AB}$ such that $V_p - V_n = V_{AB\_peak-peak}$.

Similar considerations apply with reference to the architecture of the VEHPO 10 shown in Fig. 6b for the emulation of a negative inductance. In particular, the substantial differences between the latter architecture of the VEHPO 10 and that shown in Figure 6a are in the control circuit. This control circuit is composed, with reference to the architecture of the VEHPO 10 shown in Fig. 6b, of the operational amplifier 13, the hysteresis comparator 14, the dead-time management networks 15, the anti-locking networks 16, the resistances $R_m$, $R_y$, $R_x$, $R_f$ and the capacitors $C_y$ and $C_f$. In particular, in the architecture of the VEHPO 10 shown in Fig. 6b, the inverting terminal of the operational amplifier 13 is connected via the resistance $R_x$ to the first input terminal of the VEHPO device 10. The inverting terminal of the operational amplifier 13 is also connected via the parallel $R_y$-$C_y$ and the resistance $R_m$ to the second input terminal of the VEHPO device 10. The non-inverting terminal of the operational amplifier 13 and the inverting terminal of the hysteresis comparator 14 are also connected to the second input terminal of the VEHPO device 10. The output of the operational amplifier 13 is connected to the non-inverting terminal of the hysteresis comparator 14. The non-inverting terminal of the hysteresis comparator 14 is connected via the parallel between the resistance $R_f$ and the capacitor $C_f$ to the inverting terminal of the operational amplifier 13.

Also in the case of the VEHPO 10 architecture shown in Fig. 6b, denoting with s the complex variable and with $V_{oa}(s)$, $V_{AB}(s)$ and $I_{in}(s)$ the Laplace Transforms respectively of $v_{oa}(t)$, $v_{AB}(t)$ and $i_{in}(t)$, according to the Kirchhoff's currents law, applied to the inverting node of the operational amplifier 13, if $1/(R_y \cdot C_y)$ is a sufficiently small amount compared to the input voltage frequency band, i.e. $\omega_{in} \gg 1/(R_y \cdot C_y)$, and if $1/(R_m \cdot C_y)$ is a sufficiently large amount with respect to the input voltage frequency band, i.e. $\omega_{in} \ll 1/(R_m \cdot C_y)$, it is easy to derive the expression of $V_{oa}(s)$, i.e., according to equation 5:

$$V_{oa}(s) = -\frac{R_f}{R_x \cdot (1 + s\, R_f\, C_f)} \cdot V_{AB}(s) - \frac{R_f\, R_m}{R_y} \cdot \frac{1 + s\, R_y\, C_y}{1 + s\, R_f\, C_f} \cdot I_{in}(s)$$

**Equation 5**

When the hysteresis control operates, $V_{oa}(s) \approx 0$ and according to equation 5

$$V_{AB}(s) = -\frac{R_x\, R_m}{R_y} \cdot \left(1 + s\, R_y\, C_y\right) \cdot I_{in}(s)$$

**Equation 6**

For the above hypothesis, $1/(R_y \cdot C_y)$ is a sufficiently small amount compared to the frequency band of the input voltage, i.e. $\omega_{in} \gg 1/(R_y \cdot C_y)$ and therefore equation 7 can be written:

$$V_{AB}(s) = -s \cdot C_y\, R_m\, R_x \cdot I_{in}(s)$$

**Equation 7**

By applying the Laplace Reverse Transform to equation 7, equation 8 can be obtained:

$$v_{AB}(t) = -C_y\, R_m\, R_x \cdot \frac{d\ i_{in}(t)}{dt}$$

**Equation 8**

Equation 8 shows that the VEHPO 10, in the version shown in Fig. 6b, behaves as a negative inductance of value $L_n = -C_y \cdot R_m \cdot R_x$. The values of the resistances $R_m$ and $R_x$ and the capacitance $C_y$ must be chosen based on the value of the inductance of the coil of the specific harvester 20 to be optimized. It should be noted that also in this case, these values do not depend either on the input vibration frequency or on the resonance frequency of the harvester 20 considered. This means that the device 10 according to the present invention can optimize a given harvester 20 independently of the mechanical characteristics with which it is mounted and independently of the shape and frequency of the vibrations with which the harvester is stressed.

**Experimental data**

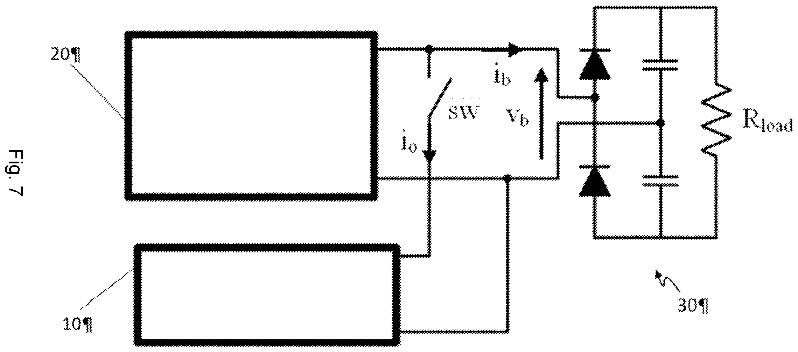

Using the experimental set-up shown in figure 7, numerous tests were performed to evaluate the performance of the VEHPO device 10 according to the present invention. The results obtained, and reported below, show the significant increase in extracted power that is obtained by inserting the VEHPO 10 in parallel with a piezoelectric harvester 20 loaded with a diode bridge rectifier 30. The tests were performed by applying both purely sinusoidal and non-sinusoidal vibrations to the harvester 20. In addition, the resonance frequency of the harvester 20 was mechanically modified in the various tests to highlight the ability of the VEHPO device 10 to operate at different frequencies without the need to change any parameters.

The harvester 20 used was MIDE PPA4011 and the shaker used to achieve the desired acceleration was TIRAvib 50009, driven by the Power Amplifier BAA 60. The following accelerometers were used to monitor the acceleration obtained at the constrained end of the harvester: 355B04 of Piezotronics PCB (sensitivity 1 V/g, measurement range $\pm$5 g peak) and 352C33 of Piezotronics PCB (sensitivity 100 mV/g, measurement range $\pm$50 g peak).

• *Tests performed with the VEH mounted so as to have a resonance frequency of 232 Hz*

Firstly, tests were carried out in the presence of sinusoidal vibrations with an acceleration characterised by a frequency coinciding with the no-load resonance frequency of the harvester 20 (232 Hz) and an amplitude of 2 g. The results of such tests are shown in Table 1, where $R_{load}$ represents the load resistance at the output of the bridge rectifier 30, $P_{no}$ is the average power ($<i_b \cdot v_b>$) at the input of the bridge rectifier 30 when the VEHPO device 10 is disconnected (switch sw in Fig. 7 open) . $P_{wo}$ instead represents the average power ($<i_b \cdot v_b>$) at the input of the bridge rectifier 30 when the VEHPO device 10 is connected (switch sw in Fig. 7 closed), $P_{loss}$ indicates the average power ($<i_b \cdot v_b>$) absorbed by the VEHPO device 10 when in operation. $\Delta P$ is the percentage gain defined as $\Delta P = 100 \cdot (P_{wo}-P_{no})/P_{no}$.

**Table 1**

|  | $R_{load}$ [k$\Omega$] | $P_{no}$ [mW] | $P_{wo}$ [mW] | $P_{loss}$ [mW] | $\Delta P$ [%] |
|---|---|---|---|---|---|
| **Sinusoidal vibrations** | 4.7 | 1.500 | 1.819 | 0.272 | 21.3 |
|  | 6.8 | 1.729 | 2.215 | 0.391 | 28.1 |
|  | 10 | 1.719 | 2.328 | 0.547 | 35.4 |
|  | 20 | 1.494 | 2.812 | 1.000 | 88.2 |
|  | 27 | 1.307 | 2.104 | 0.945 | 61.0 |

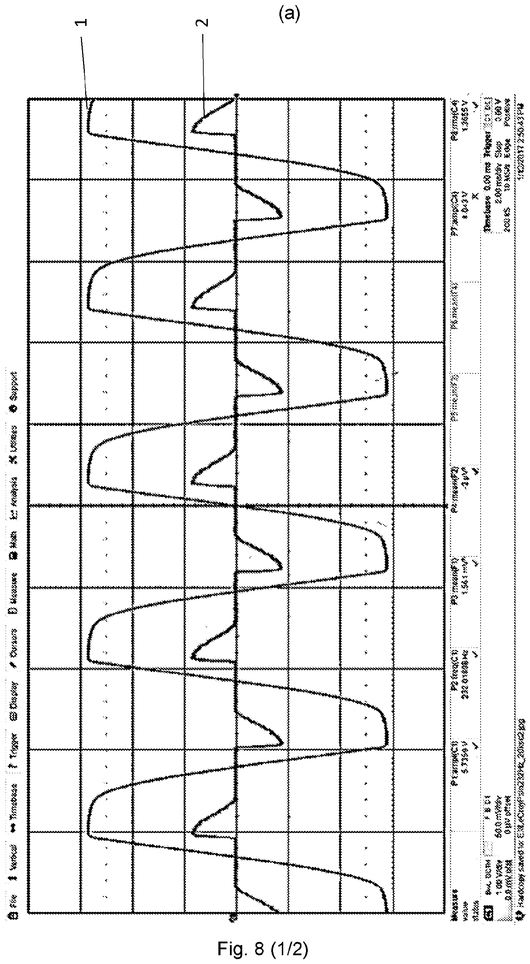

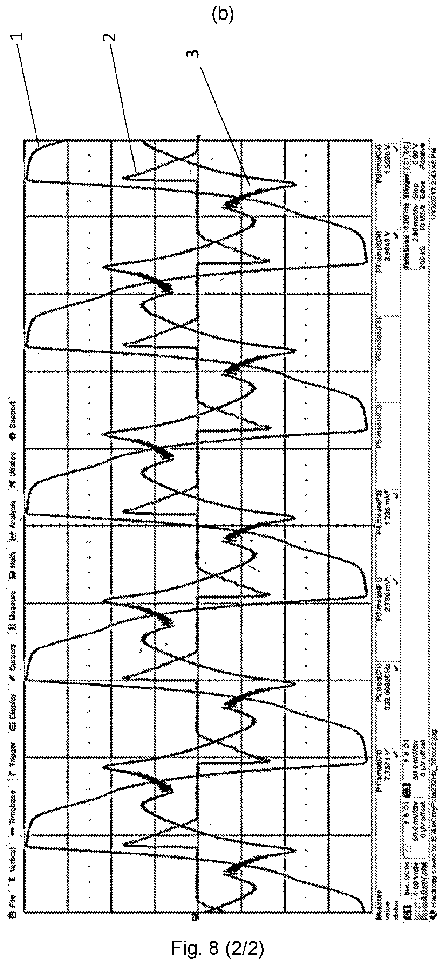

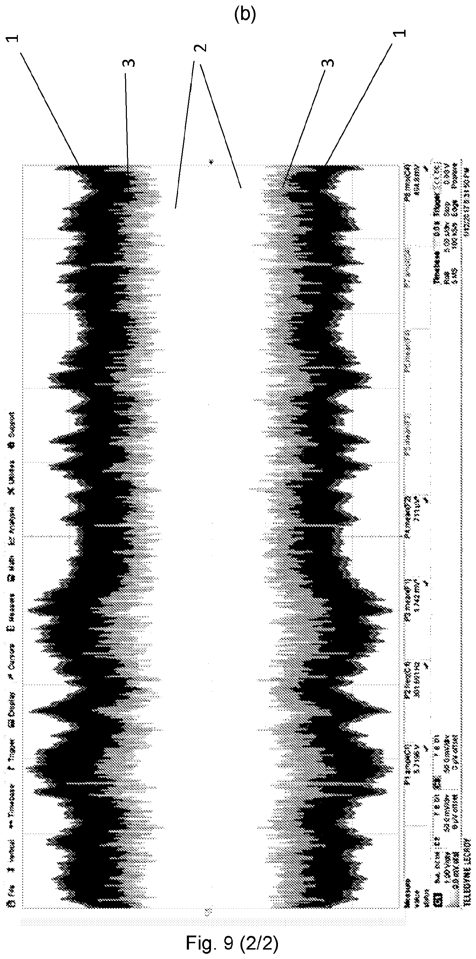

For the tests reported in Table 1, in the case $R_{load}$ = 20 k$\Omega$ with and without the VEHPO device 10, Fig. 8 shows the current and voltage trends through an oscilloscope. In particular, Fig. 8a shows the case in which the VEHPO device 10 is not connected to the harvester 20, while Fig. 9b shows the case where the VEHPO device 10 is connected in parallel to the harvester 20. The curve 1 represents the output voltage at the harvester 20 $v_b$, the curve 2 represents the current $i_b$ flowing into the bridge rectifier 30 and the curve 3 represents the current $i_o$ absorbed by the VEHPO device 10 when connected. The results reported in Table 1 show a significant increase in power provided to the bridge rectifier 30 when the VEHPO device 10 is connected to the VEH 20. It should be noted that when the VEHPO device 10 is disconnected, the maximum average power is extracted at $R_{load}$ = 6.8 k$\Omega$ and it is equal to $P_{no\_max}$ = 1.729 mW. On the other hand, when the VEHPO device 10 is connected, the maximum average power is extracted at $R_{load}$ = 20 k$\Omega$ and itis equal to $P_{wo\_max}$ = 2.812 mW. This means that, in the case where an electronic maximum power point tracking system (MPPT) is to be used based on load regulation (both with and without the VEHPO 10), the gain that would be obtained by using the VEHPO 10 would be $\Delta P_{MPPT}$% = 62.64%.

It should also be noted that, as mentioned, the VEHPO device 10 according to the present invention does not require external power but is self-powered through the voltage $v_b$. In fact, only if $v_b$ is greater than a given threshold (linked to the minimum supply voltage of the electronic components of which the VEHPO 10 is composed) the device 10 is able to operates correctly. In the present implementation the minimum value of $v_b$ is about 2 V peak to peak.

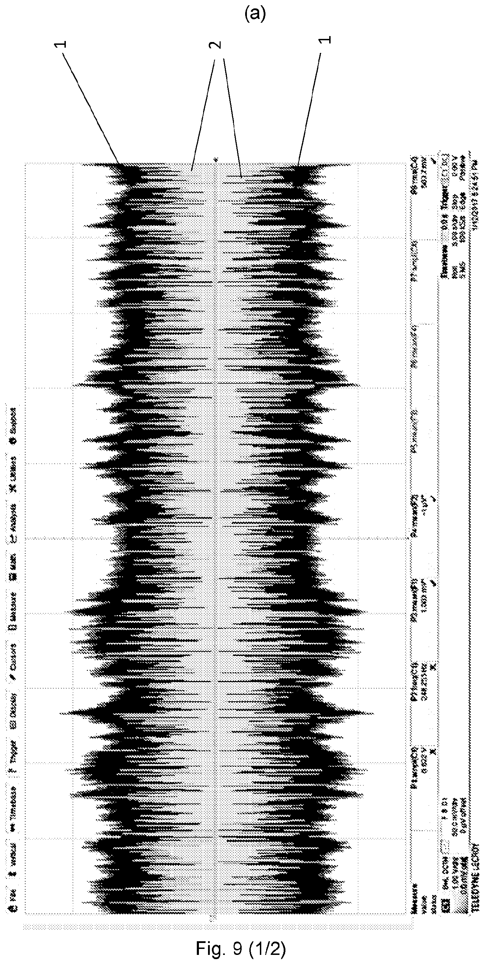

The operation of the VEHPO device 10 was also tested in the presence of non-sinusoidal vibrations. Tests performed by applying a voltage signal to the shaker amplifier that is a scaled version of the vibration measured on an aircraft and, in particular, on the fuselage side of a flying Boeing 737 are reported. This signal is characterized by a dominant harmonic content located around 232 Hz which produces, at the constrained end of the harvester 20, an acceleration RMS of approximately 5 g. The test results in presence of vibrations with this type of acceleration are shown in Table 2. Fig. 9 shows current and voltage trends through an oscilloscope in the case $R_{load}$ = 20 k$\Omega$ with and without the VEHPO 10. The meaning of the signals shown is the same as in Fig. 8. Table 2 shows the excellent performance that can be achieved by connecting the VEHPO 10 device also in the presence of non-sinusoidal vibrations. In this case, the comparison between the maximum extractable power from the VEH 20 in the absence of VEHPO 10 ($P_{no\_max}$ = 1.102 mW) and the maximum extractable power when the VEHPO 10 is connected ($P_{wo\_max}$ = 1.742 mW) shows a gain equal to $\Delta P_{MPPT}$ = 58.08%.

**Table 2**

| | $R_{load}$ [k$\Omega$] | $P_{no}$ [mW] | $P_{wo}$ [mW] | $P_{loss}$ [mW] | $\Delta$P [%] |
|---|---|---|---|---|---|
| | 4.7 | 1.044 | 1.237 | 0.218 | 18.5 |
| | 6.8 | 1.102 | 1.462 | 0.316 | 32.7 |
| **Non-sinusoidal vibrations** | 10 | 1.100 | 1.618 | 0.423 | 47.1 |
| | 20 | 1.003 | 1.742 | 0.711 | 73.7 |
| | 27 | 0.950 | 1.700 | 0.835 | 79.0 |

• *Tests performed with the VEH mounted so as to have a resonance frequency of 477 Hz*

The second set of experimental tests was performed by mounting the harvester 20 in a mechanical configuration such as to exhibit a no-load resonance frequency of 477 Hz. It is important to note that the VEHPO device 10 that was used in these tests with a frequency of 477 Hz is exactly the same as that used in the previous tests with a frequency of 232 Hz without any modification.

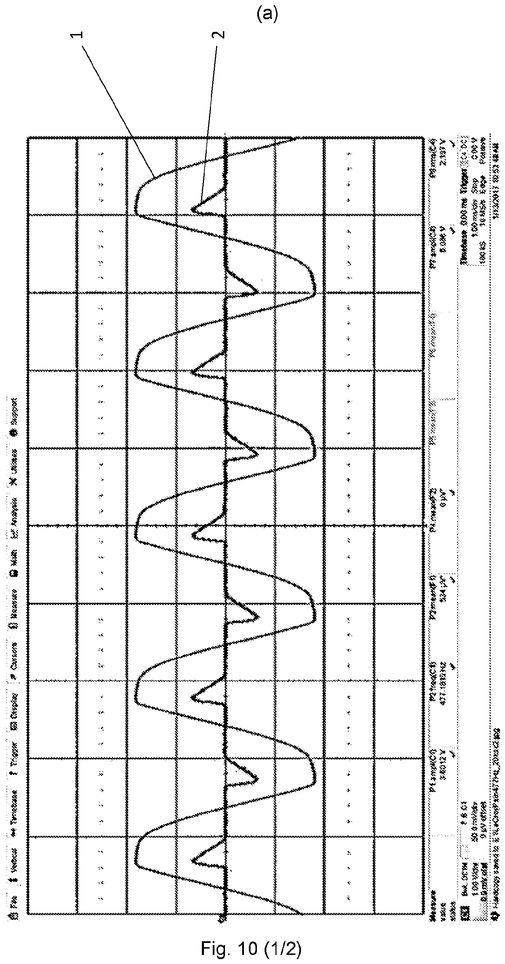

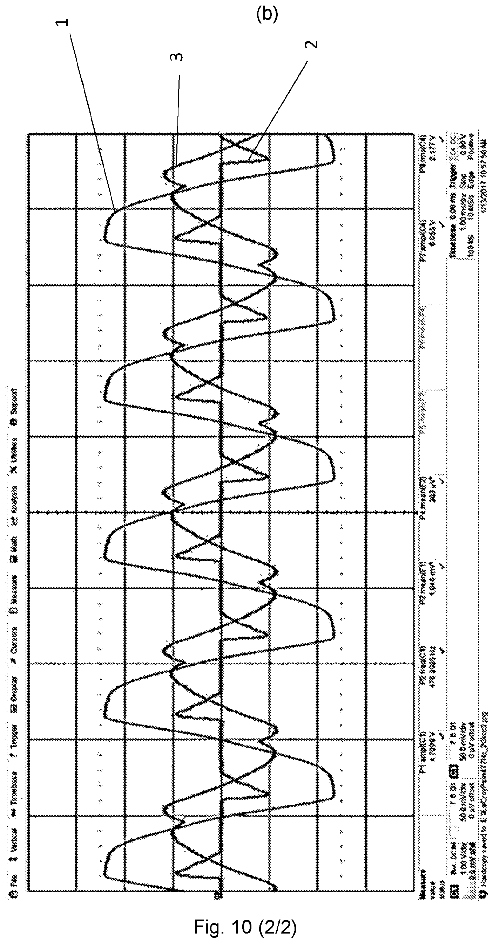

The results of the tests in presence of purely sinusoidal vibrations characterized by an acceleration with a frequency of 477 Hz and amplitude 3 g are shown in Table 3. Fig. 10 shows the voltage and current trends with an oscilloscope in the case $R_{load}$ = 20 k$\Omega$ with and without the VEHPO device 10. The meaning of the signals shown is the same as in Fig. 8. With the usual meaning of the symbols, with reference to the results of the experimental tests reported in Table 3 it can be affirmed that $\Delta P_{MPPT}$ = 45.4% is found.

**Table 3**

| | $R_{load}$ [k$\Omega$] | $P_{no}$ [mW] | $P_{wo}$ [mW] | $P_{loss}$ [mW] | $\Delta$P [%] |
|---|---|---|---|---|---|
| | 3.9 | 0.763 | 0.874 | 0.121 | 14.55 |
| | 4.7 | 0.804 | 0.990 | 0.158 | 23.13 |
| **Sinusoidal vibrations** | 6.8 | 0.791 | 1.094 | 0.230 | 38.31 |
| | 10 | 0.734 | 1.169 | 0.299 | 59.26 |
| | 20 | 0.559 | 1.004 | 0.446 | 125.1 |
| | 27 | 0.460 | 0.876 | 0.518 | 90.43 |

Also in this mechanical configuration of the harvester 20, the VEHPO device 10 was tested for non-sinusoidal vibrations. In particular, the control signal provided to the shaker amplifier is a scaled version of the vibrations measured on the engine of a moving car. The acceleration is characterized by a dominant harmonic content located around 477 Hz and an acceleration RMS on the constrained end of the harvester of about 5 g.

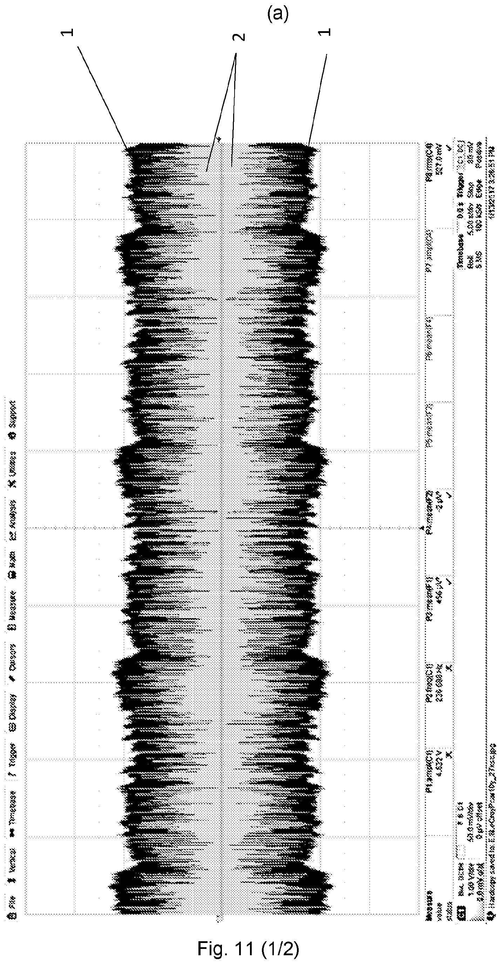

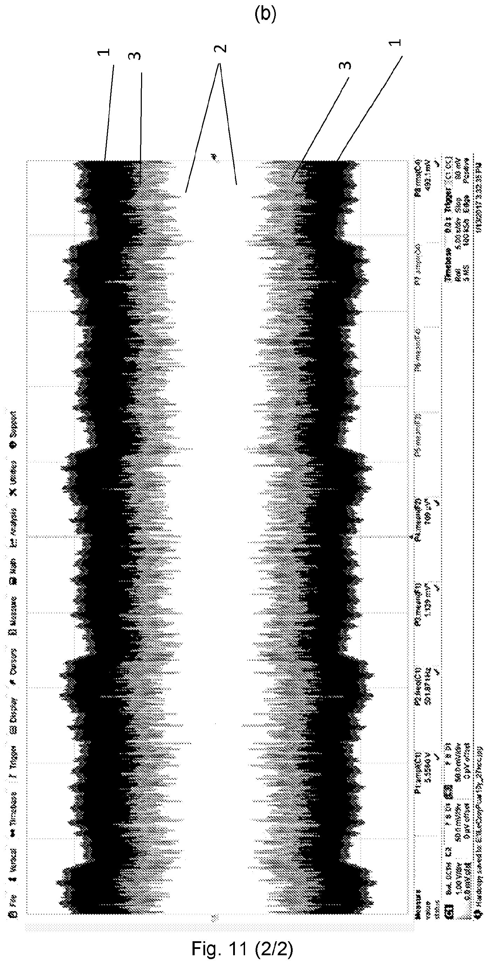

The results of the tests performed are described in Table 4 and Fig. 11 shows the voltage and current trends with an oscilloscope in the case $R_{load}$ = 27 k$\Omega$. The analysis of the data reported in Table 4, regarding the maximum power extracted from the harvester 20 in the absence of the VEHPO device 10 ($P_{no\_max}$ = 0.69 mW) and the maximum power extracted when the VEHPO device 10 is connected ($P_{wo\_max}$ = 1.189 mW), shows that the VEHPO device 10 allows an increase in power equal to $\Delta P_{MPPT}$ = 72.32%.

**Table 4**

| | $R_{load}$ [k$\Omega$] | $P_{no}$ [mW] | $P_{wo}$ [mW] | $P_{loss}$ [mW] | $\Delta$P [%] |
|---|---|---|---|---|---|
| | 6.8 | 0.690 | 0.950 | 0.210 | 37.68 |
| **Non-sinusoidal Vibrations** | 10 | 0.654 | 1.103 | 0.287 | 68.65 |
| | 20 | 0.522 | 1.189 | 0.584 | 127.8 |
| | 27 | 0.465 | 1.139 | 0.709 | 149.8 |

Therefore, based on the experimental results that have been documented, it can be concluded that the VEHPO device 10 according to the present invention is capable of significantly increasing the power provided from a harvester 20 to a diode bridge rectifier 30, both in the case of purely sinusoidal and non-sinusoidal vibrations, regardless of the shape of the acceleration imprinted and regardless of the resonance frequency of the harvester 20.

A skilled person can perform several and further modifications and variants to the device, the system and the method described above, in order to satisfy further and contingent needs, all said modifications and variants however included within the scope of protection of the present invention as defined by the appended claims.

**Claims**

1.  Circuit device (10) for the maximization of the average power provided to a passive diode bridge rectifier (30) that supplies an electric load, by a vibration energy harvester (20) coupled to an external source of vibrations having a determined and arbitrary shape and frequency, wherein said harvester (20) comprises at least a reactive component (22) in its equivalent circuit at the output terminals (24) and wherein the input voltage of the device (10) coincides with the input voltage of the passive diode bridge rectifier (30) connected to the output terminals (24) of the harvester (20),
    wherein

    said device (10) is configured to draw at the output terminals (24) of the harvester (20) a compensation current ($i_n$) equal and opposite to the current flowing through the reactive component (22), independently of the vibration frequency and of the time shape of the vibration and independently of the amplitude and of the time shape of the output voltage ($V_{AB}$) of the harvester (20),
    **characterized by** further comprising
    a power circuit composed at least of a first transistor ($M_p$) and of a second transistor ($M_n$) connected to each other with the respective drain terminals for adjusting the compensation current ($i_n$) to the current flowing through the reactive component (22) and
    a control circuit composed at least of an operational amplifier (13) and a hysteresis comparator (14) for managing the turn on and the turn off of the first and of the second transistor ($M_p$, $M_n$), wherein the output of the operational amplifier (13) is connected to the positive input terminal of the hysteresis comparator (14).

2.  Device (10) according to claim 1, wherein the compensation current ($i_n$) drawn by the device (10) at the output terminals (24) of the harvester (20) is proportional to the opposite of the time derivative of the output voltage ($V_{AB}$) of the harvester (20).

3.  Device (10) according to claim 1, wherein the compensation current ($i_n$) drawn by the device (10) at the output terminals (24) of the harvester (20) is proportional to the opposite of the time integral of the output voltage ($V_{AB}$) of the harvester (20).

4.  Device (10) according to any of the preceding claims, further comprising a first capacitor ($C_{DCp}$) connected to the source terminal of the first transistor ($M_p$) and a second capacitor ($C_{DCn}$) connected to the source terminal of the second transistor ($M_n$) for supplying respectively at voltage $V_p$ and $V_n$ the amplifier (13) and the hysteresis comparator (14) .

5.  Device (10) according to one of the preceding claims, comprising for each transistor ($M_p$, $M_n$) a first circuit network (15) composed at least of a resistance ($R_{tp}$, $R_{tn}$) and a diode ($D_{tp}$, $D_{tp}$) connected to each other in parallel and between the output of the hysteresis comparator (14) and a capacitor ($C_{tp}$, $C_{tn}$) for delaying the turn on of a transistor with respect to the other.

6.  Device (10) according to claim 4 or 5, comprising for each transistor ($M_p$, $M_n$) a second circuit network (16) composed at least of a capacitor ($C_{bp}$, $C_{bn}$) and a diode ($D_{bp}$, $D_{bp}$) for avoiding the locking of the first and of the second transistor ($M_p$, $M_n$) in an on state when the first and the second capacitor ($C_{DCp}$ ,$C_{DCn}$) are not yet charged.

7.  System (40) for maximizing the average power transferred from a vibrating source to an electric load, the system comprising:

    - at least a vibration energy harvester (20) coupled to said source of vibrations having a determined and arbitrary shape and frequency;
    - the circuit device according to one of the previous claims; and
    - a passive diode bridge rectifier (30) coupled to said electric load,

wherein the device (10) is connected in parallel between the output terminals (24) of the harvester (20) and the passive diode bridge rectifier (30).

8. Method (100) for the maximization of the average power provided to a passive diode bridge rectifier (30) that supplies an electric load, by a vibration energy harvester (20) coupled to an external source of vibrations having a determined and arbitrary shape and frequency, wherein said harvester (20) comprises at least a reactive component (22) in its equivalent circuit at the output terminals (24), the method comprising the step of

drawing at the output terminals (24) of the harvester (20) a compensation current ($i_n$), equal and opposite to the current flowing through the reactive component (22), independently of the shape and of the frequency of vibration and independently of the amplitude and of the time shape of the output voltage ($V_{AB}$) of the harvester (20),
the method being **characterized by**
adjusting the compensation current ($i_n$) to the current flowing through the reactive component (22) by means of a power circuit composed at least of a first transistor ($M_p$) and of a second transistor ($M_n$) and
managing the turn on and the turn off of the first and of the second transistor ($M_p$, $M_n$) by means of a control circuit composed at least of an operational amplifier (13) and a hysteresis comparator (14).

**Patentansprüche**

1. Schaltungsvorrichtung (10) zur Maximierung der Durchschnittsleistung, die einem passiven Diodenbrückengleichrichter (30), der eine elektrische Last versorgt, durch einen Vibrations-Energy-Harvester (20) bereitgestellt ist, der mit einer externen Vibrationsquelle gekoppelt ist, die eine bestimmte und beliebige Form und Frequenz aufweist, wobei der Harvester (20) mindestens eine reaktive Komponente (22) in seiner Ersatzschaltung an den Ausgangsanschlüssen (24) umfasst und wobei die Eingangsspannung der Vorrichtung (10) mit der Eingangsspannung des passiven Diodenbrückengleichrichters (30) übereinstimmt, der mit den Ausgangsanschlüssen (24) des Harvesters (20) verbunden ist,
wobei

die Vorrichtung (10) so konfiguriert ist, dass sie an den Ausgangsanschlüssen (24) des Harvesters (20) einen Kompensationsstrom ($i_n$) zieht, der gleich und entgegengesetzt zu dem durch die reaktive Komponente (22) fließenden Strom ist, unabhängig von der Vibrationsfrequenz und dem Zeitverlauf der Vibration und unabhängig von der Amplitude und dem Zeitverlauf der Ausgangsspannung ($V_{AB}$) des Harvesters (20),
**dadurch gekennzeichnet, dass** sie ferner umfasst
eine Leistungsschaltung, die mindestens aus einem ersten Transistor ($M_p$) und einem zweiten Transistor ($M_n$) besteht, die mit den jeweiligen Drain-Anschlüssen miteinander verbunden sind, um den Kompensationsstrom ($i_n$) an den durch die reaktive Komponente (22) fließenden Strom anzupassen und eine Steuerschaltung, die mindestens aus einem Operationsverstärker (13) und einem Hysteresekomparator (14) besteht, um das Ein- und Ausschalten des ersten und des zweiten Transistors ($M_p$, $M_n$) zu verwalten, wobei der Ausgang des Operationsverstärkers (13) mit dem positiven Eingangsanschluss des Hysteresekomparators (14) verbunden ist.

2. Vorrichtung (10) nach Anspruch 1, wobei der von der Vorrichtung (10) an den Ausgangsanschlüssen (24) des Harvesters (20) entnommene Kompensationsstrom ($i_n$) proportional zum Gegenwert der Zeitableitung der Ausgangsspannung ($V_{AB}$) des Harvesters (20) ist.

3. Vorrichtung (10) nach Anspruch 1, wobei der von der Vorrichtung (10) an den Ausgangsanschlüssen (24) des Harvesters (20) entnommene Kompensationsstrom ($i_n$) proportional zum Gegenwert des Zeitintegrals der Ausgangsspannung ($V_{AB}$) des Harvesters (20) ist.

4. Vorrichtung (10) nach einem der vorhergehenden Ansprüche, ferner umfassend einen ersten Kondensator ($C_{DCp}$), der mit dem Source-Anschluss des ersten Transistors ($M_p$) verbunden ist, und einen zweiten Kondensator ($C_{DCn}$), der mit mit dem Source-Anschluss des zweiten Transistors ($M_n$) verbunden ist, um den Verstärker (13) und den Hysteresekomparator (14) mit der Spannung $V_p$ und $V_n$ zu versorgen.

5. Vorrichtung (10) nach einem der vorhergehenden Ansprüche, umfassend für jeden Transistor ($M_p$, $M_n$) ein erstes Schaltungsnetzwerk (15), das mindestens aus einem Widerstand ($R_{tp}$, $R_{tn}$) und einer Diode ($D_{tp}$, $D_{tp}$) besteht, die parallel zueinander und zwischen dem Ausgang des Hysteresekomparators (14) und einem Kondensator ($C_{tp}$, $C_{tn}$)

zum Verzögern des Einschaltens eines Transistors gegenüber dem anderen verbunden sind.

6. Vorrichtung (10) nach Anspruch 4 oder 5, umfassend für jeden Transistor ($M_p$, $M_n$) ein zweites Schaltungsnetzwerk (16), das mindestens aus einem Kondensator ($C_{bp}$, $C_{bn}$) und einer Diode ($D_{tp}$, $D_{tp}$) besteht, um das Verriegeln des ersten und des zweiten Transistors (Mp, Mn) in einem eingeschalteten Zustand zu vermeiden, wenn der erste und der zweite Kondensator ($C_{DCp}$, $C_{DCn}$) noch nicht geladen sind.

7. System (40) zum Maximieren der Durchschnittsleistung, die von einer Vibrationsquelle zu einer elektrischen Last übertragen wird, wobei das System Folgendes umfasst:

   - mindestens einen Vibrations-Energy-Harvester (20), der mit der Vibrationsquelle gekoppelt ist, die eine bestimmte und beliebige Form und Frequenz aufweist;
   - die Schaltungsvorrichtung nach einem der vorhergehenden Ansprüche; und
   - einen passiven Diodenbrückengleichrichter (30), der mit der elektrischen Last gekoppelt ist,

   wobei die Vorrichtung (10) parallel zwischen den Ausgangsanschlüssen (24) des Harvesters (20) und dem passiven Diodenbrückengleichrichter (30) geschaltet ist.

8. Verfahren (100) zur Maximierung der Durchschnittsleistung, die einem passiven Diodenbrückengleichrichter (30), der eine elektrische Last versorgt, durch einen Vibrations-Energy-Harvester (20) bereitgestellt ist, der mit einer externen Vibrationsquelle gekoppelt ist, die eine bestimmte und beliebige Form und Frequenz aufweist, wobei der Harvester (20) mindestens eine reaktive Komponente (22) in seiner Ersatzschaltung an den Ausgangsanschlüssen (24) umfasst, wobei das Verfahren den folgenden Schritt umfasst

   Ziehen eines Kompensationsstroms ($i_n$) an den Ausgangsanschlüssen (24) des Harvesters (20), der gleich und entgegengesetzt zu dem durch die reaktive Komponente (22) fließenden Strom ist, unabhängig von der Form und der Frequenz der Vibration und unabhängig von der Amplitude und dem Zeitverlauf der Ausgangsspannung ($V_{AB}$) des Harvesters (20),
   wobei das Verfahren gekennzeichnet ist zum
   Anpassen des Kompensationsstroms ($i_n$) an den durch die reaktive Komponente (22) fließenden Strom mittels einer Leistungsschaltung, die mindestens aus einem ersten Transistor ($M_p$) und einem zweiten Transistor ($M_n$) besteht, und
   Verwalten des Einschaltens und des Ausschaltens des ersten und des zweiten Transistors ($M_p$, $M_n$) mittels einer Steuerschaltung, die mindestens aus einem Operationsverstärker (13) und einem Hysteresekomparator (14) besteht.

## Revendications

1. Dispositif de circuit (10) pour la maximisation de la puissance moyenne pourvue à un pont redresseur passif à diodes (30) qui alimente une charge électrique, par un récupérateur d'énergie vibratoire (20) couplé à une source de vibrations externe ayant une forme et une fréquence déterminées et arbitraires, dans lequel ledit récupérateur d'énergie (20) comprend au moins un composant réactif (22) dans son circuit équivalent aux bornes de sortie (24) et dans lequel la tension d'entrée du dispositif (10) coïncide avec la tension d'entrée du pont redresseur passif à diodes (30) connecté aux bornes de sortie (24) du récupérateur d'énergie (20),

   dans lequel ledit dispositif (10) est configuré pour prélever aux bornes de sortie (24) du récupérateur d'énergie (20) un courant de compensation ($i_n$) égal et opposé au courant traversant le composant réactif (22), indépendamment de la fréquence de vibration et de la courbe temporelle de la vibration, et indépendamment de l'amplitude et de la courbe temporelle de la tension de sortie ($V_{AB}$) du récupérateur d'énergie (20),
   **caractérisé en ce qu'**il comprend en outre
   un circuit de puissance composé au moins d'un premier transistor ($M_p$) et d'un deuxième transistor ($M_n$) connectés entre eux par leurs bornes de drain respectives pour ajuster le courant de compensation ($i_n$) au courant traversant le composant réactif (22), et
   un circuit de commande composé au moins d'un amplificateur opérationnel (13) et d'un comparateur d'hystérésis (14) pour gérer l'activation et la désactivation des premier et deuxième transistors ($M_p$, $M_n$), dans lequel la sortie de l'amplificateur opérationnel (13) est connectée à la borne d'entrée positive du comparateur d'hystérésis (14).

**2.** Dispositif (10) selon la revendication 1, dans lequel le courant de compensation ($i_n$) prélevé par le dispositif (10) aux bornes de sortie (24) du récupérateur d'énergie (20) est proportionnel à l'opposé de la dérivée temporelle de la tension de sortie ($V_{AB}$) du récupérateur d'énergie (20) .

**3.** Dispositif (10) selon la revendication 1, dans lequel le courant de compensation ($i_n$) prélevé par le dispositif (10) aux bornes de sortie (24) du récupérateur d'énergie (20) est proportionnel à l'opposé de l'intégrale temporelle de la tension de sortie ($V_{AB}$) du récupérateur d'énergie (20) .

**4.** Dispositif (10) selon l'une quelconque des revendications précédentes, comprenant en outre un premier condensateur ($C_{DCp}$) connecté à la borne de source du premier transistor ($M_p$) et un deuxième condensateur ($C_{DCn}$) connecté à la borne de source du deuxième transistor ($M_n$) pour alimenter respectivement aux tensions $V_p$ et $V_n$ l'amplificateur (13) et le comparateur d'hystérésis (14).

**5.** Dispositif (10) selon l'une des revendications précédentes, comprenant pour chaque transistor ($M_p$, $M_n$) un premier réseau de circuit (15) composé au moins d'une résistance ($R_{tp}$, $R_{tn}$) et d'une diode ($D_{tp}$, $D_{tp}$) connectées entre elles en parallèle et entre la sortie du comparateur d'hystérésis (14) et un condensateur ($C_{tp}$, $C_{tn}$) pour retarder l'activation d'un transistor par rapport à l'autre.

**6.** Dispositif (10) selon la revendication 4 ou 5, comprenant pour chaque transistor ($M_p$, $M_n$) un deuxième réseau de circuit (16) composé au moins d'un condensateur ($C_{bp}$, $C_{bn}$) et d'une diode ($D_{bp}$, $D_{bp}$) pour éviter le verrouillage des premier et deuxième transistors ($M_p$, $M_n$) dans un état activé lorsque les premier et deuxième condensateurs ($C_{DCp}$, $C_{DCn}$) ne sont pas encore chargés.

**7.** Système (40) pour maximiser la puissance moyenne transférée d'une source de vibrations à une charge électrique, le système comprenant :

   - au moins un récupérateur d'énergie vibratoire (20) couplé à ladite source de vibrations, ayant une forme et une fréquence déterminées et arbitraires ;
   - le dispositif de circuit selon l'une des revendications précédentes ; et
   - un pont redresseur passif à diodes (30) couplé à ladite charge électrique,

   dans lequel le dispositif (10) est connecté en parallèle entre les bornes de sortie (24) du récupérateur d'énergie (20) et le pont redresseur passif à diodes (30) .

**8.** Procédé (100) de maximisation de la puissance moyenne pourvue à un pont redresseur passif à diodes (30) qui alimente une charge électrique, par un récupérateur d'énergie vibratoire (20) couplé à une source de vibrations externe ayant une forme et une fréquence déterminées et arbitraires, dans lequel ledit récupérateur d'énergie (20) comprend au moins un composant réactif (22) dans son circuit équivalent aux bornes de sortie (24), le procédé comprenant l'étape de prélèvement aux bornes de sortie (24) du récupérateur d'énergie (20) d'un courant de compensation ($i_n$), égal et opposé au courant traversant le composant réactif (22), indépendamment de la forme et de la fréquence de vibration, et indépendamment de l'amplitude et de la courbe temporelle de la tension de sortie ($V_{AB}$) du récupérateur d'énergie (20),

   le procédé étant **caractérisé par**
   l'ajustement du courant de compensation ($i_n$) au courant traversant le composant réactif (22) au moyen d'un circuit de puissance composé au moins d'un premier transistor ($M_p$) et d'un deuxième transistor ($M_n$), et
   la gestion de l'activation et de la désactivation des premier et deuxième transistors ($M_p$, $M_n$) au moyen d'un circuit de commande composé au moins d'un amplificateur opérationnel (13) et d'un comparateur d'hystérésis (14) .

Fig. 1

Fig. 2

Fig. 3

Fig. 4

Fig. 5

Fig. 6

Fig. 7

(a)

Fig. 8 (1/2)

Fig. 8 (2/2)

EP 3 942 686 B1

(b)

24

(a)

Fig. 9 (1/2)

(b)

Fig. 9 (2/2)

(a)

Fig. 10 (1/2)

(b)

Fig. 10 (2/2)

(a)

Fig. 11 (1/2)

(b)

Fig. 11 (2/2)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. LUO et al.** Wideband Energy Harvesting for Piezoelectric Devices With Linear Resonant Behavior. *IEEE Trans. on Ultrasonics, Ferroelectrics, and Frequency Control,* July 2011, vol. 58 (7), 1294-1301

- **Y. LIU et al.** Active piezoelectric energy harvesting: General principle and experimental demonstration. *J. Intel. Mat. Syst. Str.,* March 2009, vol. 20, 575-585